# EUROPÄISCHE PATENTSCHRIFT

(11) **EP 2 715 169 B1**
(45) Veröffentlichungstag und Bekanntmachung des Hinweises auf die Patenterteilung: **20.09.2017**
(21) Anmeldenummer: 12723673.5
(22) Anmeldetag: 24.05.2012
(51) Int. Cl.: F16C 33/34, F16C 19/36, F16C 33/36

(54) **GEOMETRIEKONZEPT FÜR EINE ROLLE EINES KEGELROLLENLAGERS**
GEOMETRIC CONCEPT FOR A ROLLER OF A TAPERED ROLLER BEARING
CONCEPT GÉOMÉTRIQUE POUR ROULEAU D'UN ROULEMENT À ROULEAUX CONIQUES

(30) Priorität: 24.05.2011 DE 102011076329
(43) Veröffentlichungstag der Anmeldung: 09.04.2014
(73) Patentinhaber: Aktiebolaget SKF, 415 50 Göteborg (SE)
(72) Erfinder: LIANG, Baozhu, 97456 Hambach (DE); REUGELS, Michael, 97437 Hassfurt (DE)
(74) Vertreter: Kuhstrebe, Jochen
(86) Internationale Anmeldenummer: PCT/EP2012/059736
(87) Internationale Veröffentlichungsnummer: WO 2012/160147

(56) Entgegenhaltungen:
- DE-A1-102005 061 179
- DE-A1-102008 020 068
- JP-A- 4 331 813
- US-A1- 2009 003 747

## Beschreibung

Die vorliegende Erfindung betrifft ein Geometriekonzept für eine Kegelrolle eines Rollenlagers, insbesondere für ein Kegelrollenlager.

Die JP 4 331813 A offenbart einen Wälzkörper, bei dem sich das Profil der Stirnfläche bzw. die Krümmung derselben bis zur Laufbahn des Wälzkörpers vergrößert.

Führungsborde bei Rollenlagern, wie z. B. Kegelrollenlagern, können entweder gerade oder sphärisch ausgeführt werden. Gerade Borde werden hauptsächlich für Rollenlager kleinerer Durchmesser und somit auch kleinerer Bordbreiten eingesetzt. Hierbei ist eine Bordbreite oft zu gering, um ein definiertes Profil auf einer zur Verfügung stehenden Bordfläche herzustellen. Sphärische Borde, d.h. Borde mit konstanter Krümmung, finden ihre Anwendung größtenteils bei Rollenlagern mit größeren Durchmessern und somit auch mit größeren Bordbreiten. Ein sphärischer Bord ist dadurch gekennzeichnet, dass ein Radius, der eine einer Rollenlaufbahn zugewandte Bordform beschreibt, seinen Ursprung im Wesentlichen auf einer Rotationsachse der Rollen (Rollenrotationsachse) hat, wobei geringe Abweichungen aufgrund von Fluchtungsfehlern erlaubt sind.

Zur Verringerung der Gleitreibung zwischen den Borden und den Stirnflächen der Wälzkörperrollen eines Rollenlagers sind die den Borden gegenüberliegenden Abschnitte der Stirnflächen herkömmlicher Wälzkörperrollen sphärisch, um eine kleine Kontaktfläche zu erreichen. Im Falle eines ebenfalls sphärischen Bordes ist die Krümmung des Bordes geringer ist als die Krümmung an der Stirnfläche der Wälzkörperrolle.

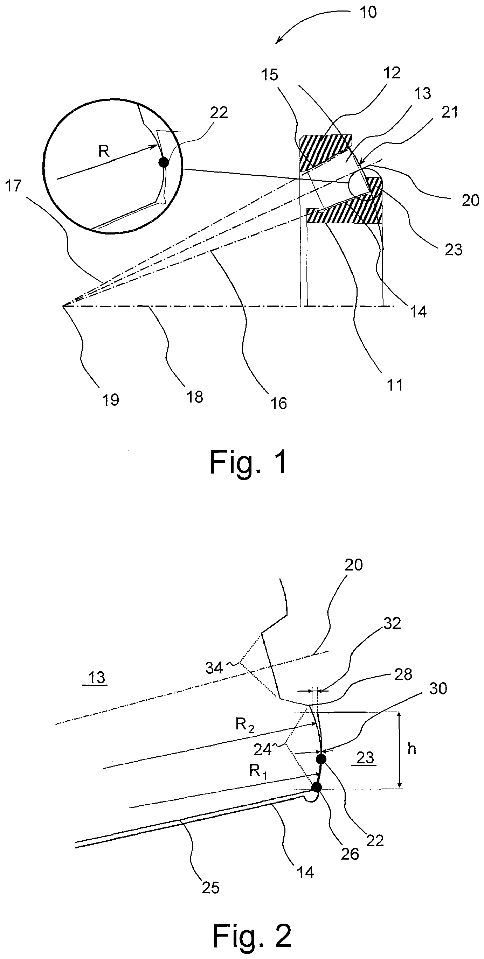

Zur näheren Erläuterung von Rollenlagern mit sphärischen Borden zeigt Fig. 1 in einer schematischen Darstellung einen Längsschnitt eines Rollenlagers 10, welches beispielhaft als Kegelrollenlager ausgebildet ist. Das Rollenlager 10 weist einen Lagerinnenring 11, einen Lageraußenring 12 und eine Mehrzahl von Rollen 13 auf, welche auf durch Innenseiten der Lagerringe 11, 12 gebildeten Laufflächen bzw. -bahnen 14, 15 abrollen können. Im Falle eines Kegelrollenlagers handelt es sich bei den Rollen bzw. Wälzkörpern 13 entsprechend um Kegelrollen.

Die Kegelrollen 13 können auf einer inneren Laufbahn 14, welche in den Lagerinnenring 11 eingeformt ist, und einer äußeren Laufbahn 15, welche in den Lageraußenring 12 eingeformt ist, abrollen. Die Laufbahnen 14, 15 sind bei einem Kegelrollenlager als Konusmäntel ausgebildet. In dem in Fig. 1 gezeigten Längsschnitt des Kegelrollenlagers 10 definieren die Laufbahnen 14, 15 in einer gedachten Verlängerung eine innere Gerade 16 und eine äußere Gerade 17, welche sich auf einer Dreh- bzw. Rotationsachse 18 des Rollenlagers 10 idealerweise an einem Drehpunkt 19 treffen.

Während eines Betriebs des Lagers 10 rotiert jede (Kegel-)Rolle 13 um eine eigene Rollenachse 20, wobei eine gedachte Verlängerung der Rollenachse 20 idealerweise ebenfalls den Drehpunkt 19 schneidet. Durch eine relative Lage von innerer Gerade 16, äußerer Gerade 17, Lagerdrehachse 18 und Rollenachse 20, welche sich alle in dem Drehpunkt 19 schneiden, ist für die Kegelrollen 13 eine Rollbedingung auf den Laufbahnen 14, 15 realisiert, so dass bei einer Relativdrehung von Lagerinnenring 11 und Lageraußenring 12 die Kegelrollen 13 auf den Laufbahnen 14, 15 im Wesentlichen ohne Schlupf abrollen und ein Anteil an diesbezüglicher Gleitreibung minimiert ist.

Um auch in axialer Richtung, d. h. in Richtung der Lagerdrehachse 18, bei einer Aufnahme von Axialkräften auftretende Reibung zu optimieren, können bei Rollenlagern die verwendeten Rollen 13 an ihrer Stirnseite 21 eine durch einen Radius R bestimmte Krümmung aufweisen, sodass die den Borden gegenüberliegenden Abschnitte der Stirnseitenfläche der Rollen 13 die Form einer Kugeloberfläche aufweisen, die, wie es in der Vergrößerung von Fig. 1. angedeutet ist, an einem Kontaktpunkt 22 in Kontakt mit einem geraden bzw. sphärisch ausgeführten Bord 23 beispielsweise des Lagerinnenrings 11 steht.

Abseits des Bereiches eines möglichen Kontaktpunktes 22, kann die Stirnseite auch eben sein oder eine andere Form aufweisen, während die den Borden gegenüberliegenden Abschnitte der Stirnflächen der Rolle 13 eine konstante Krümmung aufweisen. Als Krümmung wird allgemein die Richtungsänderung pro durchlaufene Länge eines infinitesimal kurzen Kurvenstücks verstanden. Ein Kreis mit dem Radius r hat somit überall die gleiche, konstante Krümmung 1/r, seine Richtung ändert sich überall gleich stark. Bei allen anderen Kurven kann die Krümmung von Kurvenpunkt zu Kurvenpunkt bzw. entlang eines Weges auf der einer 3-dimensionalen Oberfläche variieren. Den Kehrwert der Krümmung nennt man Krümmungsradius. Dies ist der Radius desjenigen Kreises (Krümmungskreis), der in einer Umgebung des Berührpunkts die beste Näherung an die betrachtete Kurve darstellt.

Bei Rollenlagern, wie beispielsweise Zylinder-, Tonnen- oder Kegelrollenlagern, die mit geraden bzw. ebenen Borden ausgeführt sind, weist der Rolle-Bord-Kontakt im Vergleich zu sphärisch ausgeführten Borden eine höhere Flächenpressung (Hertzsche Pressung) zwischen der Rollenstirnseite 21 und der dieser zugewandten Bordfläche auf. Dabei versteht man unter der Hertzschen Pressung die größte Spannung, die in der Mitte der Berührungsfläche zweier elastischer Körper herrscht. Werden, wie bei Rollenlagern mit geraden Borden, zwei elastische Körper (gewölbte Rollenstirnseite und gerader bzw. ebener Bord) gegeneinander gepresst, dann berühren sie sich im idealisierten Fall nur punktförmig. Durch die Elastizität entsteht aber im realen Fall an dem Kontaktpunkt 22 eine Abplattung und somit eine Berührungsfläche. Auf der Berührungsfläche entsteht in beiden Körpern eine charakteristische Spannungsverteilung (Flächenpressung), wobei die Spannung stets in der Mitte am höchsten ist. Berühren sich, wie hier, eine Kugeloberfläche und eine ebene Bordfläche, so entsteht eine Berühr- oder Kontaktellipse. Aufgrund der vergleichsweise hohen Flächenpressung kommt es bei Rollenlagern mit geraden Borden im Allgemeinen zu einem relativ schlechten Schmierfilmaufbau bei höheren wirkenden Kräften. Des Weiteren führen gerade bzw. ebene Borde im Vergleich zu sphärischen Borden zu kleineren Kontaktellipsen zwischen Rollenstirnseite und der dieser zugewandten Bordfläche, weshalb es zu einer Überschneidung der Kontaktellipse mit den Bordkanten nur bei extremen Belastungen kommen kann. Ebenso besteht im Allgemeinen bei gerade bzw. eben ausgeführten Borden eine geringe Empfindlichkeit des Kontaktpunktes 22 gegenüber Fluchtungsfehlern, sodass ein definierter Kontaktpunkt 22 zwischen Rolle 13 und Bord möglich ist. Während bei eben ausgeführten Borden einerseits eine größere Schiefstellung der Rollen 13 ermöglicht wird, ergibt sich andererseits eine vergleichsweise schlechte Führung der Rollen während des Laufs.

Kegelrollenlager im Großlagerbereich können, wie anhand von Fig. 1 gezeigt, mit sphärischen Borden 23 ausgeführt werden, was verglichen mit geraden bzw. ebenen Borden eine geringere Flächenpressung zwischen der Rollenstirnseite 21 und der der Rolle 13 zugewandten Bord- bzw. Anlauffläche zur Folge hat. Sphärisch ausgeführte Borde 23 führen, verglichen zu geraden Borden, außerdem zu größeren Kontaktellipsen zwischen Rollenstirnseite 21 und gegenüberliegender Bordfläche, sodass es häufiger zu Überschneidungen der Kontaktellipse mit den Bordkanten und damit zu Kantenspannungen kommen kann. Im Allgemeinen besteht bei sphärisch ausgeführten Borden 23 eine höhere Empfindlichkeit des Kontaktpunktes 22 gegenüber Fluchtungsfehlern als es bei ebenen bzw. gerade ausgeführten Borden der Fall ist. Obwohl sphärische Borde einerseits eine geringere Schiefstellung der Rolle 13 zur Folge haben, kann andererseits aufgrund der engen Schmiegung zwischen Rollenstirnseite 21 und der der Rolle 13 zugewandten Bordfläche die Rolle 13 während des Laufs besser geführt werden. Durch unterschiedliche Wahl der Krümmungsradien (und/oder deren Ursprüngen) von Rollenstirnfläche 21 und sphärischer Bordfläche ist auch mit sphärischen Borden theoretisch ein definierter Kontaktpunkt 22 zwischen Rolle 13 und Bord 23 möglich.

Einer der Hauptnachteile eines sphärischen Bords und einer sphärischen Stirnfläche der Wälzkörperrollen ist jedoch die resultierende Empfindlichkeit des Kontaktpunktes 22 zwischen Rollenstirnseite 21 und Bord 23 im Hinblick auf Fluchtungsfehler. Abweichungen im Laufbahnwinkel, Rollenwinkel, Bordradius, sowie Rollenstirnseitenradius haben hierauf einen entscheidenden Einfluss.

Die Aufgabe der vorliegenden Erfindung besteht somit darin, diese Empfindlichkeit des Kontaktpunktes zwischen Rollenstirnseite und Bord im Hinblick auf Fluchtungsfehler zu reduzieren.

Um dies zu erreichen, wird vorliegend eine entsprechend optimierte Geometrie der Stirnfläche der Kegelrollen vorgeschlagen, insbesondere eine spezielle Geometrie einer Anlauffläche für einen Bord eines Lagerringes, mit welchem die Kegelrollen mit der Anlauffläche in Kontakt kommen können. Die Stirnfläche weist eine Anlauffläche für einen Bord eines Lagerringes auf, deren Krümmung von einem Startpunkt auf der Anlauffläche bis zu einem von der Laufbahn abgewandten inneren Ende der Anlauffläche unter einer Vergrößerung der Krümmung monoton steigt.

Durch die gekrümmte Oberfläche wird zum einen eine geringe Hertzsche Pressung gewährleistet, während durch die Vergrößerung der Krümmung bis zum Ende der Anlauffläche gleichzeitig das Risiko einer Überschneidung des Wälzkörpers mit der Bordkante minimiert werden kann. Das heißt, der Kontaktpunkt zwischen Stirnfläche der Rolle und Bord ist unempfindlicher gegenüber Fluchtungsfehlern. In diesem Zusammenhang ist als Anlauffläche auf der Stirnfläche der Kegelrolle derjenige Teil der Stirnfläche zu verstehen, mit der die Stirnfläche der Kegelrolle bei den gegebenen geometrischen Verhältnissen theoretisch mit einem Bord eines Lagerrings in Kontakt kommen kann. Zusätzlich kann die Stirnfläche weitere Stirnflächenbereiche aufweisen, deren Geometrie beliebig, beispielsweise eben oder gekrümmt, sein kann. Die Kegelrolle für ein Rollenlager hat also eine die Laufbahn der Kegelrolle abschließenden Stirnfläche, die eine Anlauffläche für einen Bord eines Lagerringes aufweist, deren Krümmung von einem Startpunkt auf der Anlauffläche bis zu einem Ende der Anlauffläche monoton steigt.

Bei einigen Ausführungsbeispielen ist der Startpunkt an dem äußeren, an die Laufbahn angrenzenden, Ende der Anlauffläche angeordnet. Dies kann eine maximale Kompensation von Schiefstellungen in einer Richtung bewirken.

Bei einigen Ausführungsbeispielen ist der Startpunkt zwischen einen äußeren, an die Laufbahn angrenzenden, Ende der Anlauffläche und einem inneren, von der Laufbahn abgewandten, Ende der Anlauffläche angeordnet, wobei die Krümmung der Anlauffläche von dem Startpunkt zu beiden Enden der Laufbahn hin monoton steigt. Dadurch kann eine Schiefstellung des Lagers in zwei unterschiedlichen Richtungen kompensiert werden. Die Rolle-Bordgeometrie kann bei einigen Ausführungsbeispielen so ausgelegt sein, dass der Kontaktpunkt bzw. -bereich zwischen Anlauffläche und Bord bei idealer Geometrie am Startpunkt liegt.

Bei einigen Ausführungsbeispielen steigt die Krümmung von dem Startpunkt bis zu dem jeweiligen Ende der Laufbahn streng monoton, was für jeden Punkt auf der Anlauffläche eine optimale Kontaktellipse gewährleisten kann.

Bei einigen weiteren Ausführungsbeispielen ist der monotone Krümmungsverlauf derart, dass innerhalb eines den Startpunkt umfassenden ersten Bereichs die Krümmung monoton bzw. streng monoton steigt, wobei in einem zwischen dem ersten Bereich und dem Ende der Anlauffläche liegenden zweiten Bereich die Krümmung konstant bzw. 0 ist. In dem zweiten Bereich kann die Anlauffläche somit beispielsweise eben sein und die Krümmung 0 aufweisen.

Bei einigen Ausführungsbeispielen weist ein erster, den Startpunkt umfassender Bereich der Anlauffläche eine konstante erste Krümmung auf, die geringer ist als eine zweite Krümmung der Anlauffläche in einem an den ersten Bereich angrenzenden zweiten Bereich. Mit anderen Worten ist in dem ersten Bereich die Krümmung konstant und in dem an den ersten Bereich angrenzenden und zwischen dem erstem Bereich und dem Ende der Anlauffläche zweiten Bereich ist die Krümmung ebenfalls konstant, jedoch größer als im ersten Bereich. Dies kann bei gleichen Vorteilen eine Vereinfachung der Produktion der Kegelrollen bewirken. Selbstverständlich können in weiteren Ausführungsbeispielen mehrere Bereiche jeweils konstanter Krümmung einander benachbart sein, wobei die Krümmung eines weiter in Richtung des Endes der Anlauffläche liegenden Bereichs jeweils größer ist als die Krümmung des benachbarten, in Richtung des Startpunkts liegenden Bereichs.

Bei einigen Ausführungsbeispielen ist der Krümmungsverlauf so gewählt, dass ein Winkel (α) zwischen einer Tangentialebene an das Ende der Anlauffläche und einer zweiten Tangentialebene an eine von dem Startpunkt bis zu dem Ende der Anlauffläche verlängerten Kugeloberfläche mit einer der Krümmung am Startpunkt entsprechenden Krümmung in einem Bereich von größer als 0° bis 30° liegt. Diese Vergrößerung der Krümmung kann bei üblichen Bordgeometrien die Empfindlichkeit bezüglich Fluchtungsfehlern hinreichend verbessern.

Weitere vorteilhafte Ausgestaltungen und Weiterbildungen sind Gegenstand der abhängigen Ansprüche.

Ausführungsbeispiele der vorliegenden Erfindung werden nachfolgend, bezugnehmend auf die beiliegenden Figuren, detaillierter erläutert. Es zeigen:
- Fig. 1: einen schematischen Längsschnitt durch ein Rollenlager mit sphärischen Borden;
- Fig. 2: einen schematischen Längsschnitt durch eine Wälzkörperrolle mit einer Stirnfläche gemäß einem Ausführungsbeispiel der vorliegenden Erfindung;
- Fig. 3: einen schematischen Längsschnitt durch eine Wälzkörperrolle mit einer Stirnfläche gemäß einem weiteren Ausführungsbeispiel der vorliegenden Erfindung;
- Fig. 4: einen Ausschnittsvergrößerung eines schematischen Längsschnitts durch eine Wälzkörperrolle mit einer Stirnfläche gemäß einem weiteren Ausführungsbeispiel der vorliegenden Erfindung; und
- Fig. 5: ein schematisches Flussdiagramm für ein Ausführungsbeispiel eines Herstellungsverfahrens für eine Wälzkörperrolle.

Fig. 2 zeigt in einem schematischen Längsschnitt durch eine Wälzkörperrolle gemäß einem Ausführungsbeispiel der vorliegenden Erfindung.

Dargestellt ist ein Teil einer Wälzkörperrolle 13. Die Rolle 13 weist eine Rollenstirnfläche 21 auf, die einen gekrümmte Anlauffläche 24 umfasst, mit der die Wälzkörperrolle 13 mit dem Bord 23 in Kontakt steht, bzw. mit diesem aufgrund der geometrischen Randbedingungen prinzipiell in Kontakt kommen kann. Der Bord 23 hat im dargestellten Beispiel eine rein sphärische Geometrie, d.h. die der Rolle zugewandte Oberfläche des Bordes hat in radialer Richtung über die gesamte Bordhöhe h eine konstante Krümmung.

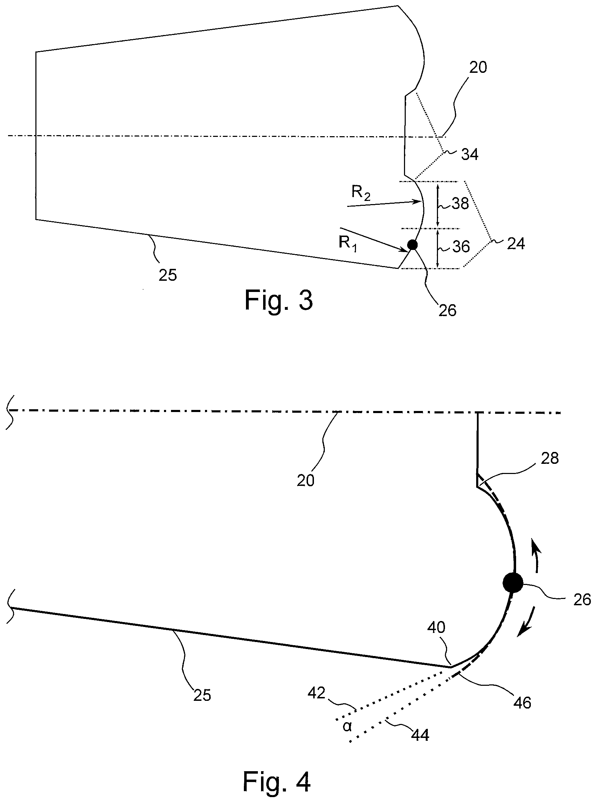

Wie es neben Fig. 2 auch in der vergrößernden Ansicht der Fig. 3 dargestellt ist, vergrößert sich eine Krümmung einer dem Bord 23 zugewandte Anlauffläche 24 auf der Stirnseite 21 von einem Startpunkt 26 auf der Anlauffläche 24 bis zu einem Ende 28 der Anlauffläche 24 monoton, d.h. diese wird bis zum Ende kontinuierlich größer. Der Startpunkt 26 befindet sich an dem äußeren, an die Laufbahn 25 angrenzenden, Ende der Anlauffläche 24, sodass die Krümmung R₁ geringer ist als die Krümmung R₂.

Liegt der Kontaktpunkt 22 wie in Figur 2 dargestellt, ergibt sich aus dem Krümmungsverlauf der Anlauffläche 24, dass ein erstes Spaltmaß 30 in der Nähe des Kontaktpunktes 22 kleiner ist als ein weiter entferntes zweites Spaltmaß 32, was zu einer erhöhten Unempfindlichkeit gegenüber Fluchtungsfehlern führt.

Zusätzlich zur Anlauffläche 24 weist die Stirnfläche des dargestellten Ausführungsbeispiels einen weiteren Stirnflächenbereich 34 auf, der eben ist, bei weiteren Ausführungsbeispielen jedoch beliebige andere Geometrien aufweisen kann.

Wie bereits erwähnt, soll unter der Krümmung vorliegend eine Richtungsänderung pro Längeneinheit verstanden werden. Als ein Maß für eine vorzeichenunabhängige Richtungsänderung ist die Krümmung positiv oder Null. Die Krümmung z. B. einer Geraden ist überall gleich null, weil sich ihre Richtung nicht ändert. Ein Kreis mit einem Radius r hat überall gleiche Krümmung (nämlich 1/r), denn seine Richtung ändert sich überall gleich stark. Bei allen anderen Kurven wechselt die Krümmung von Kurvenpunkt zu Kurvenpunkt. Die Krümmung einer Kurve in einem Punkt gibt also an, wie stark die Kurve in der unmittelbaren Umgebung des Punktes von einer Geraden abweicht. Ein Maß für die Krümmung einer gewölbten Fläche, wie beispielsweise die Anlauffläche 24, kann beispielsweise auch die zunehmende Abweichung der Fläche von einer Tangentialebene an die Fläche in einem gegebenen Punkt sein. Eine verstärkte Krümmung macht sich dann als stärkere Abweichung von der Ebene bemerkbar. Ein monoton steigender Krümmungsverlauf bedeutet somit, dass die Krümmung, wenn man sich entlang einer Ortskurve entlang einer Oberfläche bewegt, bei jedem infinitesimalen Schritt entlang der Ortskurve entweder größer wird oder gleich bleibt. Ein streng monoton steigender Krümmungsverlauf bedeutet entsprechend, dass die Krümmung bei jedem infinitesimalen Schritt entlang der Ortskurve größer wird.

Bei den in den Fig. 2 und 3 skizzierten Ausführungsbeispiel befindet sich der Startpunkt 26 unmittelbar an einem an die Laufbahn 25 angrenzenden Ende der Anlauffläche 24. Somit nimmt die Krümmung von dem Startpunkt 26 bis zu dem von der Laufbahn 25 abgewandten Ende 28 der Anlauffläche 24 monoton zu.

Fig. 3 zeigt schematisch ein weiteres Ausführungsbeispiel, bei dem die Krümmung nicht streng monoton sondern abschnittsweise zunimmt. Das heißt, in einem ersten, den Startpunkt 26 umfassenden Bereich 36 der Anlauffläche 24 weist diese eine konstante erste Krümmung R₁ auf, die geringer ist als eine zweite Krümmung R₂ der Anlauffläche in einem an den ersten Bereich angrenzenden zweiten Bereich 38.

Nachdem anhand der Figuren 2 und 3 Ausführungsbeispiele beschrieben wurden, bei denen der Startpunkt 26 am Rand der Laufbahn 25 der Wälzkörperrolle 13 angeordnet ist, wird nachfolgend anhand der Figur 4 ein weiteres Ausführungsbeispiel beschrieben, bei dem der Startpunkt 26 zwischen einen äußeren, an die Laufbahn 25 angrenzenden, Ende 40 der Anlauffläche 24 und einem inneren, von der Laufbahn 25 abgewandten, Ende 28 der Anlauffläche 24 angeordnet ist, wobei die Krümmung der Anlauffläche von dem Startpunkt 26 zu beiden Enden der Laufbahn 24 hin monoton steigt oder sich streng monoton vergrößert.

Die Krümmungsänderung der Anlauffläche 24 kann beispielsweise beschrieben werden, indem man den Winkel α zwischen einer Tangentialebene 42 an das Ende 40 oder 28 der Anlauffläche 24 und einer zweiten Tangentialebene 44 an eine von dem Startpunkt 26 bis zu dem Ende der Anlauffläche 24 verlängerten Kugeloberfläche 46 mit einer der Krümmung am Startpunkt 26 entsprechenden Krümmung bestimmt, wie in Figur 4 illustriert.

Gemäß einigen Ausführungsbeispielen ermöglicht die monoton bzw. streng monoton steigende Krümmung der Anlauffläche 24 Krümmungsänderung der Anlauffläche 24 in einem Winkelbereich α von größer als 0° bis 30°, vorzugsweise in einem Bereich 0° 0' 6" ≤ α ≤ 30°.

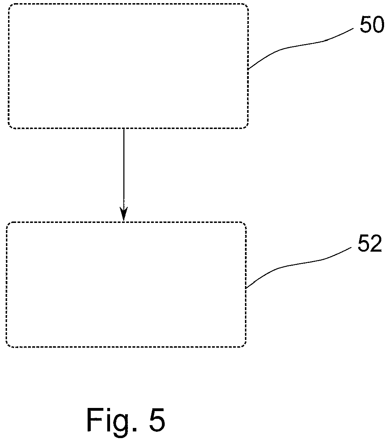

Anhand von Fig. 5 wird nun der Vollständigkeit halber noch ein Ausführungsbeispiel eines Herstellungsverfahrens zum Herstellen einer Wälzkörperrolle für ein Rollenlager dargestellt.

In einem Vorbereitungsschritt 50 wird eine Wälzkörperrolle für ein Rollenlager mit einer eine Laufbahn abschließende Stirnfläche bereitgestellt; und

In einem Optimierschritt 52 wird eine Anlauffläche 24 für einen Bord eines Lagerringes auf der Stirnfläche erzeugt, deren Krümmung von einem Startpunkt 26 auf der Anlauffläche 24 bis zu einem Ende 28 der Anlauffläche 24 monoton steigt

Zusammenfassend sind die vorgeschlagenen Kegelrollen geeignet, um die Empfindlichkeit des Rolle-Bord-Kontaktpunktes gegenüber Fluchtungsfehlern und Schiefstellungen des Lagers in der Anwendung zu reduzieren, aber dennoch eine ausreichende Führung der Rolle während des Laufs auf der Laufbahn gewährleisten zu können. Die erfindungsgemäßen Kegelrollen gewährleisten eine gute Rollenführung bei geringer Hertzschen Pressung, sowie ein geringes Risiko für Kantenüberschneidungen und der daraus resultierenden unerwünschten Kantenspannungen.

Die erfindungsgemäße Kegelrollen-Geometrie weist mit anderen Worten folgende vorteilhafte Eigenschaften auf:
- Aufgrund der gekrümmten Anlauffläche bleibt die Rollenführung während des Laufs erhalten,
- Geringe Hertzsche Pressung aufgrund der gekrümmten Anlauffläche,
- Die sich zum Ende vergrößernde Krümmung der Anlauffläche reduziert die Größe der Kontaktellipse im Vergleich zu rein sphärischen Borden, wodurch eine Überschneidung der Kontaktellipse mit den Bordkanten vermieden wird,
- Aufgrund der sich zum Ende vergrößernden Krümmung der Anlauffläche besteht eine geringere Empfindlichkeit der Lage des Kontaktpunktes zwischen Bord und Anlauffläche bzw. Rollenstirnseite im Hinblick auf Fluchtungsfehler,
- Ein definierter Kontaktpunkt zwischen Rollenstirnseite und Bord ist möglich.

Die vorgeschlagene Rollengeometrie ist so ausgelegt, dass der Kontaktpunkt zwischen Rollenstirnseite und Bord in der Nähe des Startpunktes liegen kann. Verschiebt sich der Kontaktpunkt aufgrund von Fluchtungsfehlern in Richtung der Enden der Anlauffläche, so ist die Empfindlichkeit stark reduziert, was ein "wandern" des theoretischen Kontaktpunktes über die Bordkanten hinaus und somit auch hohe Kantenspannungen verhindern kann.

### Bezugszeichenliste

- 10: Rollenlager
- 11: Lagerinnenring
- 12: Lageraußenring
- 13: Rolle
- 14: innere Rollenlaufbahn
- 15: äußere Rollenlaufbahn
- 16: innere Gerade
- 17: äußere Gerade
- 18: Lagerrotationsachse
- 19: Drehpunkt
- 20: Rollenachse
- 21: Rollenstirnseite
- 22: Kontaktpunkt
- 23: sphärischer Bord
- 24: Anlauffläche
- 25: Laufbahn
- 26: Startpunkt
- 28: inneres Ende der Anlauffläche
- 30: erstes Spaltmaß
- 32: zweites Spaltmaß
- 34: weiterer Stirnflächenbereich
- 36: erster Bereich
- 38: zweiter Bereich
- 40: inneres Ende der Anlauffläche
- 42: Tangentialebene
- 44: zweite Tangentialebene
- 46: Kugeloberfläche
- 50: Vorbereitungsschritt
- 52: Optimierungsschritt

## Patentansprüche

1. Eine Kegelrolle (13) für ein Kegelrollenlager mit einer eine Laufbahn (25) abschließenden Stirnfläche (21), wobei die Kegelrolle (13) eine Anlauffläche (24) für einen Bord (23) eines Lagerringes (11) aufweist,
**dadurch gekennzeichnet, dass**
die Krümmung der Anlauffläche von einem Startpunkt (26) auf der Anlauffläche (24) bis zu einem von der Laufbahn (25) abgewandten inneren Ende (28) der Anlauffläche (24) unter einer Vergrößerung der Krümmung monoton steigt.

2. Die Kegelrolle (13) nach Anspruch 1, bei der der Startpunkt (26) zwischen einen äußeren, an die Laufbahn angrenzenden, Ende (40) der Anlauffläche (24) und einem inneren, von der Laufbahn abgewandten, Ende (28) der Anlauffläche (24) angeordnet ist, wobei die Krümmung der Anlauffläche (24) von dem Startpunkt (26) zu beiden Enden der Anlauffläche (24) hin monoton steigt.

3. Die Kegelrolle (13) nach Anspruch 1, bei dem der Startpunkt (26) an dem äußeren, an die Laufbahn (25) angrenzenden, Ende (40) der Anlauffläche (24) angeordnet ist.

4. Die Kegelrolle (13) nach einem der vorhergehenden Ansprüche, bei der ein erster, den Startpunkt (26) umfassender Bereich (36) der Anlauffläche (24) eine konstante erste Krümmung aufweist, die geringer ist als eine zweite Krümmung der Anlauffläche (24) in einem an den ersten Bereich angrenzenden zweiten Bereich (38).

5. Die Kegelrolle (13) nach einem der Ansprüche, 1 bis 3 bei der die Krümmung von dem Startpunkt (26) bis zu dem jeweiligen Ende der Anlauffläche (24) streng monoton steigt.

6. Die Kegelrolle (13) nach einem der vorhergehenden Ansprüche, wobei ein Winkel (α) zwischen einer Tangentialebene (42) an das Ende der Anlauffläche (24) und einer zweiten Tangentialebene (44) an eine von dem Startpunkt (26) bis zu dem Ende der Anlauffläche (24) verlängerten Kugeloberfläche (46) mit einer der Krümmung am Startpunkt (26) entsprechenden Krümmung in einem Bereich von größer als 0° bis 30° liegt.

7. Kegelollenlager mit zumindest einer Kegelrolle (13) gemäß einem der Ansprüche 1 bis 6.

8. Kegelrollenlager gemäß Anspruch 7, bei dem ein sich von einer Laufbahn (14) eines Lagerringes (11) weg erstreckender Bord (23) einen der Anlauffläche (24) der Wälzkörperrolle (13) zugewandten Oberflächenbereich mit einer gekrümmten Oberfläche konstanter Krümmung aufweist.

9. Verfahren zum Herstellen einer Kegelrolle (13) für ein Kegelrollenlager, umfassend:
Bereitstellen einer Kegelrolle (13) für ein Kegelrollenlager mit einer eine Laufbahn (25) abschließenden Stirnfläche (21); und
Erzeugen einer Anlauffläche (24) für einen Bord (23) eines Lagerringes (11) auf der Kegelrolle (13),
**dadurch gekennzeichnet, dass**
dieKrümmung der Anlauffläche von einem Startpunkt (26) auf der Anlauffläche (24) bis zu einem von der Laufbahn (25) abgewandten inneren Ende der Anlauffläche (24) unter einer Vergrößerung der Krümmung monoton steigt.

## Claims

1. Tapered roller (13) for a tapered roller bearing having an end face (21) which terminates a raceway (25), the tapered roller (13) having a run-on face (24) for a rim (23) of a bearing ring (11), **characterized in that** the curvature of the run-on face rises monotonously from a start point (26) on the run-on face (24) as far as an inner end (28) of the run-on face (24), which inner end (28) faces away from the raceway (25), with an increase in the curvature.

2. Tapered roller (13) according to Claim 1, in which the start point (26) is arranged between an outer end (40) of the run-on face (24), which end (40) adjoins the raceway, and an inner end (28) of the run-on face (24), which end (28) faces away from the raceway, the curvature of the run-on face (24) increasing monotonously from the start point (26) towards both ends of the run-on face (24).

3. Tapered roller (13) according to Claim 1, in which the start point (26) is arranged at the outer end (40) of the run-on face (24), which end (40) adjoins the raceway (25).

4. Tapered roller (13) according to one of the preceding claims, in which a first region (36) of the run-on face (24), which region (36) includes the start point (26), has a constant first curvature which is smaller than a second curvature of the run-on face (24) in a second region (38) which adjoins the first region.

5. Tapered roller (13) according to one of Claims 1 to 3, in which the curvature increases strictly monotonously from the start point (26) as far as the respective end of the run-on face (24).

6. Tapered roller (13) according to one of the preceding claims, an angle (α) between a tangential plane (42) onto the end of the run-on face (24) and a second tangential plane (44) onto a spherical surface (46) with a curvature which corresponds to the curvature at the start point (26), which spherical surface (46) is extended from the start point (26) as far as the end of the run-on face (24), lies in a range of from greater than 0° to 30°.

7. Tapered roller bearing having at least one tapered roller (13) according to one of Claims 1 to 6.

8. Tapered roller bearing according to Claim 7, in which a rim (23) which extends away from a raceway (14) of a bearing ring (11) has a surface region which faces the run-on face (24) of the rolling-body roller (13), with a curved surface of constant curvature.

9. Method for producing a tapered roller (13) for a tapered roller bearing, comprising:
provision of a tapered roller (13) for a tapered roller bearing with an end face (21) which terminates a raceway (25); and
production of a run-on face (24) for a rim (23) of a bearing ring (11) on the tapered roller (13),
**characterized in that**
the curvature of the run-on face increases monotonously from a start point (26) on the run-on face (24) as far as an inner end of the run-on face (24), which inner end faces away from the raceway (25), with an increase in the curvature.

## Revendications

1. Rouleau conique (13) pour un palier à rouleaux coniques comprenant une surface frontale (21) fermant un chemin de roulement (25), le rouleau conique (13) présentant une surface de butée (24) pour un bord (23) d'une bague de palier (11), **caractérisé en ce que**
la courbure de la surface de butée augmente de manière monotone avec augmentation de la courbure depuis un point de départ (26) sur la surface de butée (24) jusqu'à une extrémité intérieure (28) de la surface de butée (24) opposée au chemin de roulement (25).

2. Rouleau conique (13) selon la revendication 1, dans lequel le point de départ (26) est disposé entre une extrémité extérieure (40) de la surface de butée (24) adjacente au chemin de roulement et une extrémité intérieure (28) de la surface de butée (24) opposée au chemin de roulement, la courbure de la surface de butée (24) augmentant de manière monotone depuis le point de départ (26) jusqu'aux deux extrémités de la surface de butée (24).

3. Rouleau conique (13) selon la revendication 1, dans lequel le point de départ (26) est disposé au niveau de l'extrémité extérieure (40) de la surface de butée (24) adjacente au chemin de roulement (25).

4. Rouleau conique (13) selon l'une quelconque des revendications précédentes, dans lequel une première région (36) de la surface de butée (24) comprenant le point de départ (26) présente une première courbure constante qui est inférieure à une deuxième courbure de la surface de butée (24) dans une deuxième région (38) adjacente à la première région.

5. Rouleau conique (13) selon l'une quelconque des revendications 1 à 3, dans lequel la courbure augmente de manière fortement monotone depuis le point de départ (26) jusqu'à l'extrémité respective de la surface de butée (24).

6. Rouleau conique (13) selon l'une quelconque des revendications précédentes, dans lequel un angle (α) entre un plan tangentiel (42) à l'extrémité de la surface de butée (24) et un deuxième plan tangentiel (44) au niveau d'une surface sphérique (46) prolongée depuis le point de départ (26) jusqu'à l'extrémité de la surface de butée (24) avec une courbure correspondant à la courbure au point de départ (26) est situé dans une plage de plus de 0° à 30°.

7. Palier à rouleaux coniques comprenant au moins un rouleau conique (13) selon l'une quelconque des revendications 1 à 6.

8. Palier à rouleaux coniques selon la revendication 7, dans lequel un bord (23) s'étendant à l'écart d'un chemin de roulement (14) d'une bague de palier (11) présente une région de surface tournée vers la surface de butée (24) du rouleau formant corps de roulement (13) avec une surface courbe de courbure constante.

9. Procédé de fabrication d'un rouleau conique (13) pour un palier à rouleaux coniques, comprenant :
fournir un rouleau conique (13) pour un palier à rouleaux coniques comprenant une surface frontale (21) fermant un chemin de roulement (25) ; et produire une surface de butée (24) pour un bord (23) d'une bague de palier (11) sur le rouleau conique (13),
**caractérisé en ce que**
la courbure de la surface de butée augmente de manière monotone avec augmentation de la courbure depuis un point de départ (26) sur la surface de butée (24) jusqu'à une extrémité intérieure de la surface de butée (24) opposée au chemin de roulement (25).
